# EUROPÄISCHE PATENTANMELDUNG

(11) **EP 3 557 490 A1**
(43) Veröffentlichungstag der Anmeldung: **23.10.2019**
(21) Anmeldenummer: 19163813.9
(22) Anmeldetag: 19.03.2019
(51) Int. Cl.: G06N 3/08, G06N 3/04

(54) **TRAININGSVERFAHREN**

(30) Priorität: 20.04.2018 DE 102018206110
(71) Anmelder: ZF Friedrichshafen AG, 88046 Friedrichshafen (DE)
(72) Erfinder: Schutera, Mark, 74670 Forchtenberg (DE)

(57) **Zusammenfassung**

Verfahren (30) zum Trainieren von künstlichen neuronalen Netzwerken (18; 22) mit den folgenden Schritten: Bereitstellen (S1) von Referenzdaten (16) umfassend wenigstens einen spatio-temporären Referenzdatensatz, wenigstens eine Charakteristik des Referenzdatensatzes und eine Zuordnung des Referenzdatensatzes zu einem realen Referenzdatensatz oder einem künstlichen Referenzdatensatz; Erzeugen (S2) eines künstlichen spatio-temporären Trainingsdatensatzes (10) mittels eines ersten künstlichen neuronalen Netzwerks (18) mit einer ersten Topologie; Ermitteln (S3) von wenigstens einer Charakteristik (24) des erzeugten Trainingsdatensatzes; Erkennen (S4) des erzeugten Trainingsdatensatzes mittels eines zweiten künstlichen neuronalen Netzwerks (22) mit einer zweiten Topologie als einen realen Trainingsdatensatz oder als einen künstlichen Trainingsdatensatz, indem die ermittelte Charakteristik (24) mit einer Charakteristik des Referenzdatensatzes verglichen wird; Verändern (S5.1) der ersten Topologie, um das Erzeugen von künstlichen spatio-temporären Trainingsdaten zu verbessern und/oder der zweiten Topologie (S5.2), um das Erkennen des erzeugten Trainingsdatensatzes zu verbessern.

## Beschreibung

### GEBIET DER ERFINDUNG

Die vorliegende Erfindung betrifft ein Verfahren zum Trainieren von künstlichen neuronalen Netzwerken.

### TECHNISCHER HINTERGRUND

Der Artikel "CyCADA: Cycle-Consistent Adversarial Domain Adaptation" von Judy Hoffmann et al. erschienen am 29.12.2017 zeigt ein Trainingsverfahren für ein Generative Aadversarial Network (GAN) für Bilddaten.

### ZUSAMMENFASSUNG DER ERFINDUNG

Vor diesem Hintergrund liegt der Erfindung die Aufgabe zugrunde, ein Generative Adversarial Network für spatio-temporäre Daten zu schaffen.

Erfindungsgemäß wird diese Aufgabe durch ein Verfahren mit den Merkmalen des Patentanspruchs 1 gelöst.

Demgemäß ist vorgesehen:
- ein Verfahren zum Trainieren von künstlichen neuronalen Netzwerken mit den folgenden Schritten: Bereitstellen von Referenzdaten umfassend wenigstens einen spatio-temporären Referenzdatensatz, wenigstens eine Charakteristik des Referenzdatensatzes und eine Zuordnung des Referenzdatensatzes zu einem realen Referenzdatensatz oder einem künstlichen Referenzdatensatz; Erzeugen eines künstlichen spatio-temporären Trainingsdatensatzes mittels eines ersten künstlichen neuronalen Netzwerks mit einer ersten Topologie; Ermitteln von wenigstens einer Charakteristik des erzeugten Trainingsdatensatzes; Erkennen des erzeugten Trainingsdatensatzes mittels eines zweiten künstlichen neuronalen Netzwerks mit einer zweiten Topologie als einen realen Trainingsdatensatz oder als einen künstlichen Trainingsdatensatz, indem die ermittelte Charakteristik mit einer Charakteristik des Referenzdatensatzes verglichen wird; Verändern der ersten Topologie, um das Erzeugen von künstlichen spatio-temporären Trainingsdaten zu verbessern und/oder der zweiten Topologie, um das Erkennen des erzeugten Trainingsdatensatzes zu verbessern.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt.

Ein künstliches neuronales Netzwerk (KNN, englisch artificial neural network - ANN) ist insbesondere ein in einem Rechenprogramm nachgebildetes Netzwerk aus vernetzten künstlichen Neuronen. Die künstlichen Neuronen sind dabei typischerweise auf verschiedenen Schichten (layers) angeordnet. Üblicherweise umfasst das künstliche neuronale Netzwerk eine Eingangsschicht und eine Ausgabeschicht (output layer), deren Neuronenausgabe als einzige des künstlichen neuronalen Netzwerks sichtbar wird. Zwischen der Eingangsschicht und der Ausgabeschicht liegende Schichten werden typischerweise als verdeckte Schichten (hidden layer) bezeichnet. Typischerweise wird zunächst eine Architektur bzw. Topologie eines künstlichen neuronalen Netzwerks initiiert und dann in einer Trainingsphase für eine spezielle Aufgabe oder für mehrere Aufgaben in einer Trainingsphase trainiert.

Der Begriff "Topologie eines KNN" umfasst sämtlich Aspekte bezüglich des Aufbaus eines KNN. Hierunter fallen beispielsweise die Anzahl der Neuronen des KNN, die Aufteilung der Neuronen auf die einzelnen Schichten des KNN, die Anzahl der Schichten eines KNN, die Vernetzung der Neuronen und die Gewichtung der Vernetzung.

Das Training des künstlichen neuronalen Netzwerks umfasst dabei typischerweise eine Veränderung eines Gewichts einer Verbindung zwischen zwei künstlichen Neuronen des künstlichen neuronalen Netzwerks. Das Gewicht enthält Information zur Stärke der Berücksichtigung eines Eingangs eines Neurons. Das Training des künstlichen neuronalen Netzwerks kann auch eine Entwicklung von neuen Verbindungen zwischen künstlichen Neuronen, ein Löschen von bestehenden Verbindungen zwischen künstlichen Neuronen, ein Anpassen von Schwellwerten der künstlichen Neuronen und/oder ein Hinzufügen oder ein Löschen von künstlichen Neuronen umfassen.

Ein Beispiel für ein künstliches neuronales Netzwerk ist ein flaches künstliches neuronales Netzwerkwerk (shallow neural network), welches oft nur eine einzelne verdeckte Schicht zwischen der Eingabeschicht und der Ausgabeschicht enthält und damit relativ einfach zu trainieren ist. Ein weiteres Beispiel ist ein tiefes künstliches neuronales Netzwerkwerk (deep neural network), welches zwischen der Eingangsschicht und der Ausgabeschicht mehrere verschachtelte verdeckte Schichten von künstlichen Neuronen enthält. Das tiefe künstliche neuronale Netzwerk ermöglicht dabei eine verbesserte Erkennung von Mustern und komplexen Zusammenhängen.

Beispielsweise kann das künstliche neuronale Netzwerk ein ein- bzw. mehrschichtiges feedforward-Netzwerk oder eine rekurrentes Netzwerk sein. Feedforward-Netzwerke weisen Neuronen auf, die ausschließlich vorwärtsgespeist werden, d.h. ein Neuron wird ausschließlich von höher liegenden Schichten gespeist.

Ein rekurrentes Netzwerk weist bidirektional verbundene Neuronen auf, d.h. ein Neuron wird zudem von tiefer liegenden Schichten gespeist. Somit lässt sich bei einem späteren Durchlauf des KNN Information aus eine früheren Durchlauf berücksichtigen, wodurch ein Erinnerungsvermögen geschaffen wird.

Ein Trainingssystem ist eine Recheneinheit, auf welcher ein KNN trainiert wird.

Generative Adversarial Networks (GANs) umfassen zwei künstliche neuronale Netzwerke. Ein erstes künstliches neuronales Netzwerk (Generator) erzeugt Kandidaten nach einem generativen Modell, ein zweites künstliches neuronales Netzwerk (Diskriminator) bewertet die Kandidaten nach einem diskriminierenden Modell. Der Diskriminator bewertet die von dem Generator erzeugten Kandidaten. Während das zweite Netzwerk lernt, Kandidaten zutreffend zu bewerten, versucht das erste Netzwerk, das zweite zu einer schlechten bzw. falschen Antwort zu bringen. Dadurch wird nach und nach die Erzeugung der Kandidaten des ersten künstlichen neuronalen Netzwerks und die Bewertungsmethode des zweiten künstlichen neuronalen Netzwerks verbessert.

Spatio-temporäre Daten enthalten einen Zusammenhang zwischen räumlichen und zeitlichen Informationen.

Ein Referenzdatensatz ist ein künstlich erzeugter Datensatz oder ein realer Datensatz der einem künstlichen neuronalen Netzwerk zum Trainieren bereitgestellt wird. Dem künstlerischen neuronalen Netzwerk wird mitgeteilt, ob es sich um einen künstlich erzeugten Datensatz oder um einen realen Datensatz handelt. Ziel des Referenzdatensatzes ist es, dass ein künstliches neuronales Netzwerk nach dem Trainieren sicher zwischen künstlichen und realen Daten unterscheiden kann, d. h. einen Datensatz einem künstlichen oder realen Ursprung zuordnen kann, bis der Generator authentischere künstliche Daten erzeugt. Diese Zuordnung wird häufig auch als "Label" bezeichnet.

Reale Datensätze sind aus einem realen Umfeld entstanden. Ihre Daten werden in der Regel von Sensoren erfasst. Künstliche Daten werden hingegen künstlich erzeugt. Hierfür kann beispielsweise auf eine Erzeugung mittels stochastischen Prozessen zurückgegriffen werden. Zudem dienen häufig Computerspiele als Quelle für künstliche Daten. Authentischere künstliche Daten sind solche, die häufiger als reale Daten erkannt werden.

Eine Charakteristik eines Datensatzes ist in dieser Anmeldung eine beliebige Eigenschaft des Datensatzes. Ein Beispiel für eine Charakteristik eines Datensatzes ist eine Schrittweite zwischen zwei Zeitpunkten, eine Schrittweite zwischen zwei Hüllen einer Trajektorie, eine Richtungsänderung einer Trajektorie, eine Größe einer Hülle, welche ein Objekt umfasst oder dergleichen.

Ein Trainingsdatensatz wird einem künstlichen neuronalen Netzwerk ebenfalls zum Trainieren bereitgestellt. Im Gegensatz zu einem Referenzdatensatz wird dem künstlichen neuronalen Netzwerk mit dem Trainingsdatensatz jedoch keine Zuordnung des Trainingsdatensatzes übergeben, sondern das künstliche neuronale Netzwerk ist eingerichtet, eine Zuordnung zu ermitteln.

Eine Position ist eine Ortsangabe. Die Ortsangabe kann relativ oder absolut sein. D. h. eine Position kann beispielsweise GPS Koordinaten (absolut) oder in Relation zu anderen Objekten (relativ) gegeben sein. Relative Positionen können auch Bilddaten entnommen werden bzw. als Trajektorie dargestellt sein.

Eine Trajektorie, auch Bahnkurve, Pfad oder Weg ist der Verlauf einer räumlichen Kurve, entlang der sich ein Körper oder ein Punkt, beispielsweise der Schwerpunkt eines starren Körpers, bewegt. In dieser Anmeldung wird eine Trajektorie anhand von Positionen zu Zeitpunkten erzeugt.

Ein Objekt ist in dieser Anmeldung ein beliebiger beweglicher Gegenstand, dessen Trajektorie in einem spatio-temporären Datensatz gespeichert ist. Um die Position eines Objektes zu speichern, kann auf eine Hülle, die das Objekt umschließt zurückgegriffen werden.

Eine Schrittweite ist die Entfernung zwischen zwei Datenpunkten xᵢ und xᵢ₊₁. Eine Schrittweite kann beispielsweise durch ein äquidistantes Gitter gegeben sein. Alternativ lässt sich eine Schrittweite auch adaptiv vorgeben, sodass die Schrittweite von verschiedenen Bedingungen abhängig sein kann. In dieser Anmeldung kann sich die Schrittweite auf die Entfernung zweier Positionen zu benachbarten Zeitpunkten oder auf einen Zeitabstand, der zwischen zwei benachbarten Positionen liegt, beziehen

Eine Trajektorie enthält in jedem Punkt eine Richtung. Die Änderung der Richtung zwischen zwei Punkten bildet die Richtungsänderung. Die Richtungsänderung kann auch durch die zweite Ableitung eines Ortes ausgedrückt werden.

Regressionsanalysen sind statistische Analyseverfahren, die zum Ziel haben, Beziehungen zwischen einer abhängigen und einer oder mehreren unabhängigen Variablen zu modellieren. Sie werden insbesondere verwendet, wenn Zusammenhänge quantitativ zu beschreiben oder Werte der abhängigen Variablen zu prognostizieren sind. Ein Beispiel für eine Regressionsanalyse ist eine lineare Ausgleichsgerade oder die Methode der kleinsten Quadrate.

In dieser Anmeldung umfasst ein Koordinatensystem zumindest eine x-Achse sowie eine y-Achse. Es versteht sich, dass die Achsen auch anders benannt sein können. Geht die y-Achse durch den Koordinatenursprung (0|0), dann bezeichnet der y-Achsenabschnitt oder Ordinatenabschnitt die y-Koordinate des Schnittpunktes eines Funktionsgraphen mit der y-Achse. Unabhängig von der Lage der y-Achse entspricht der y-Achsenabschnitt dem Funktionswert an der Stelle x=0.

Die Steigung ist ein Maß für die Steilheit einer Geraden oder einer Kurve. Die Steigung lässt sich auch als erste Ortsableitung ausdrücken.

Die grundlegende Idee der Erfindung ist es, das Erzeugen künstlicher Tracking Daten mit einem GAN zu trainieren.

Bei Tracking-Anwendungen (Daten-Zeitreihen) gibt es nur begrenzte Datensätze (Tracklets). Aufgrund des spatio-temporären Charakters der Daten wird die Zuordnung zu realen oder künstlichen Daten zudem erschwert.

Die Erfindung schafft eine neue Möglichkeit zur Validierung von Trainingsdaten, indem ein Abstandsmaß für den Abstand zweier spatio-temporären Datensätze definiert wird. Das Abstandsmaß zweier Datensätze geht aus einem Vergleich einer Charakteristik der Datensätze hervor.

Somit lassen sich künstlich generierte Daten, die realen Daten möglichst ähnlich sind, erzeugen. Dies ermöglicht, ein künstliches neuronales Netzwerk besser auf die Verarbeitung von realen Daten vorzubereiten.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform der Erfindung umfassen die spatio-temporären Trainingsdaten Datenpaare aus einer Position eines Objekts sowie einem Zeitpunkt. Dementsprechend können die Datenpaare Datenpunkte einer Trajektorie sein. Es versteht sich, dass die Position auch in einem mehrdimensionalen Vektor gespeichert sein kann.

Dabei ist es zweckmäßig, wenn das Objekt als Hülle, welche das Objekt umfasst, gespeichert ist. Somit ist es nicht erforderlich den Umriss eines Objekts zu speichern, sondern lediglich einen Punkt der Hülle sowie die Abmessungen der Hülle. Dies reduziert den Speicherbedarf.

Die Hülle kann beispielsweise als Rechteck, welches ein Objekt umschließt, ausgebildet sein. Das Rechteck ist dabei so klein wie möglich zu wählen. Die Größe der kleinsten Hülle und bei rechteckigen Hüllen auch ein Seitenverhältnis der Seiten der Hülle ist ein Indikator für den Ursprung der Daten. Plausible Seitenverhältnisse und plausible Größen der kleinsten Hülle können dabei objektabhängig sein.

Gemäß einer vorteilhaften Ausführungsform der Erfindung ist die wenigstens eine Charakteristik des Referenzdatensatzes und die wenigstens eine Charakteristik des künstlichen Trainingsdatensatzes eine Schrittweite zwischen einem ersten Zeitpunkt und einem zweiten Zeitpunkt. Reale Datensätze, die mittels Sensoren erfasst wurden weisen häufig eine charakteristische Schrittweite oder eine charakteristische adaptive Schrittweite auf. Somit ist es möglich, Rückschlüsse über die Schrittweite auf den Ursprung der Daten zu ziehen.

Gemäß einer vorteilhaften Ausführungsform der Erfindung ist die wenigstens eine Charakteristik des Referenzdatensatzes und die wenigstens eine Charakteristik des künstlichen Trainingsdatensatzes eine Richtungsänderung einer Richtung zwischen Positionen zu Zeitpunkten. Abrupte Richtungsänderungen sind ein Indikator für künstlich erzeugte Trajektorien. Mit anderen Worten sind reale Trajektorien relativ glatt und auch die Diskretisierung einer kontinuierlichen Trajektorie weist beschränkte Richtungsänderungen auf. Die Richtungsänderung kann abhängig von der Schrittweite sein. Dementsprechend können Richtungsänderungen zwischen Datenpunkten mit größeren Schrittweiten größer ausfallen als Richtungsänderungen zwischen Datenpunkte mit kleineren Schrittweiten.

Gemäß einer bevorzugten Weiterbildung der Erfindung umfasst die wenigstens eine Charakteristik eines Datensatzes mehrere Datenpunkte und wird mittels einer Regressionsanalyse verarbeitet. Somit kann die Charakteristik für alle Datenpunkte als Kurve gespeichert werden. Dies verringert den Speicherbedarf, da lediglich eine Funktionsvorschrift mit Parametern zu speichern ist.

Die Regressionsanalyse kann beispielsweise eine lineare Regression sein.

Gemäß einer vorteilhaften Ausführungsform der Erfindung wird ein Abstand zwischen zwei Datensätzen anhand eines Abstands der wenigstens einen Charakteristik der Datensätze bestimmt. Der Abstand kann insbesondere auch aus dem Abstand mehrerer Charakteristiken hervorgehen. Somit lässt sich die Entfernung von Trajektorien mittels einer Metrik bestimmen.

Dabei ist es zweckmäßig, wenn der Abstand zwischen zwei Datensätzen anhand eines Abstands der Regressionsanalysen der Datensätze, insbesondere anhand eines Y-Achsenabschnittes und/oder einer Steigerung, ermittelt wird. Dementsprechend kann vorgesehen sein, dass ein Abstand zweier Kurven bzw. Regressionsanalysen anhand deren Parameter ermittelt wird.

Dabei ist es zweckmäßig, wenn für die Ermittlung des Abstands zweier Regressionsanalysen ein Regressionsfehler berücksichtigt wird.

Ein Abstand zwischen zwei Trajektorien lässt sich beispielsweise über die Bestimmung eines Abstands zweier Vektoren der Trajektorien ermitteln. Die Einträge der Vektoren können Parameter der Regressionsanalyse, z.B. eine Steigung und ein y-Achsenabschnitt einer Regressionsgeraden und/oder einen Regressionsfehler sein.

Seien a₁ ... aᵢ die Parameter einer ersten Regressionsanalyse einer ersten Trajektorie und e ein Regressionsfehler der ersten Regressionsanalyse und seien b₁ ... bᵢ die Parameter einer zweiten Regressionsanalyse einer zweiten Trajektorie und f ein Regressionsfehler der zweiten Regressionsanalyse, lässt sich der Abstand |s| zwischen zwei Trajektorien beispielsweise wie folgt ermitteln:

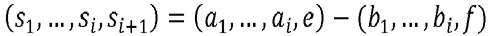

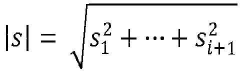

Der Abstandsbegriff unterscheidet sich in dieser Patentanmeldung möglicherweise vom landläufigen Verständnis. Die Patentanmeldung sieht vor, dass zwei Geraden mit einem unterschiedlichen Y-Achsenabschnitt und mit einer unterschiedlichen Steigung einen Abstand aufweisen, da die Parameter der Geraden voneinander beanstandet sind. Dies ist nicht im Widerspruch dazu, dass Geraden mit einer unterschiedlichen Steigung einen Schnittpunkt aufweisen.

Gemäß einer vorteilhaften Ausführungsform der Erfindung ist das Verfahren ein iteratives Verfahren. Bei einem selbst lernenden iterativen Verfahren, wird das Verfahren mit jedem Iterationsschritt angepasst, also verbessert.

Das Computerprogrammprodukt gemäß einer Ausführungsform der Erfindung führt die Schritte eines Verfahrens gemäß der vorangehenden Beschreibung aus, wenn das Computerprogrammprodukt auf einem Computer läuft. Wenn das betreffende Programm auf einem Computer zum Einsatz kommt, ruft das Computerprogrammprodukt einen Effekt hervor, nämlich das Training eines GANs, sodass das GAN authentischere künstliche Daten erzeugen kann.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Figur 1: ein schematisches Blockschaltbild eines Verfahrens gemäß einer Ausführungsform der Erfindung;
- Figur 2: eine schematische Darstellung eines Datensatzes gemäß einer Ausführungsform der Erfindung;

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nicht anders ausgeführt ist - jeweils mit denselben Bezugszeichen versehen.

### BESCHREIBUNG VON AUSFÜHRUNGSBEISPIELEN

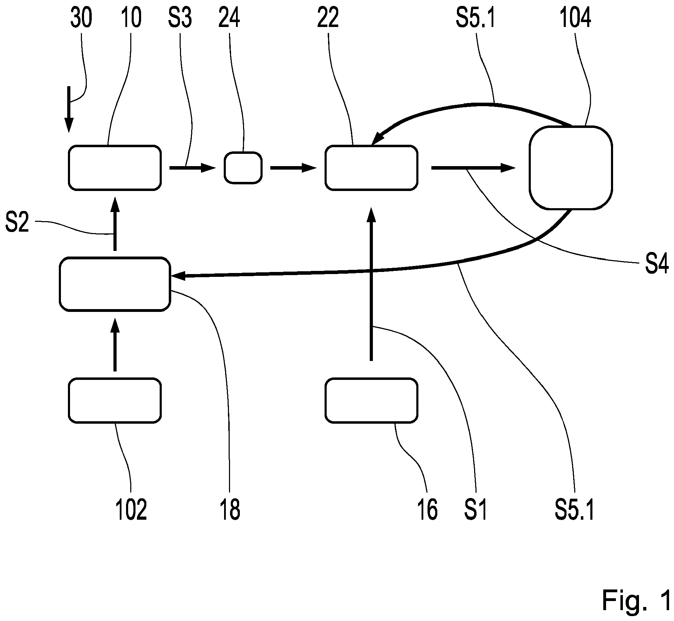

Figur 1 zeigt ein schematisches Blockschaltbild zu einem Verfahren 30 zum Trainieren von künstlichen neuronalen Netzwerken. Zum Ausführen des Verfahrens 30 sind ein erstes künstliches neuronales Netzwerk 18 sowie ein zweites künstliches neuronales Netzwerk 22 bereitgestellt. Das erste künstliche neuronale Netzwerk 18 bildet einen sogenannten Generator zum Erzeugen von künstlichen Trainingsdaten. Das zweite künstliche neuronale Netzwerk 22 bildet einen sogenannten Diskriminator, um Trainingsdaten einem künstlichen Ursprung oder einem realen Ursprung zuzuordnen S4. Die Zuordnung 104 kann mittels einer Binärzahl 0 oder 1 oder mittels eines Skalars entsprechend einer Wahrscheinlichkeit erfolgen.

In dem Schritt S1 werden Referenzdaten, die einen Referenzdatensatz, eine Charakteristik sowie eine Zuordnung enthalten, bereitgestellt. Dementsprechend wird der Diskriminator zunächst hinsichtlich einer richtigen Zuordnung des Referenzdatensatzes 16 trainiert.

In dem Schritt S2 wird ein künstlicher spatio-temporärer Trainingsdatensatz 10 mittels des Generators erzeugt. Zum erzeugen des spatio-temporären Trainingsdatensatzes 10 wird auf ein weißes Rauschen 102 zurückgegriffen. Weißes Rauschen ist ein zufälliger stochastischer Prozess. Es versteht sich, dass ein stochastischer Prozess zum Bereitstellen von künstlichen Daten anwendungsspezifisch gewählt werden kann. Beispielsweise kann auf einen beliebigen Rauschprozess, zum Beispiel pinkes Rauschen oder braunes Rauschen, oder auf Daten, die entsprechend einer bestimmten Wahrscheinlichkeitsverteilung verteilt sind, zurückgegriffen werden.

In dem Schritt S3 wird eine Charakteristik 24 des erzeugten künstlichen Trainingsdatensatzes 10 ermittelt.

In dem Schritt S4 entscheidet der Diskriminator aufgrund der ermittelten Charakteristik 24 über eine Zuordnung des Trainingsdatensatzes 10 zu einem künstlichen oder einem realen Ursprung. Der Diskriminator erhält eine Rückmeldung, ob seine Zuordnung richtig oder falsch war.

Daraufhin wird in dem Schritt S5.1 die Topologie des ersten künstlichen neuronalen Netzwerks 18 bzw. des Generators angepasst, wenn die Zuordnung des Diskriminators richtig war. Die Topologie des Generators wird dahingehend angepasst, dass der Generator den Diskriminator zu einem falschen Ergebnis verleitet, d.h. Ziel des Generators ist es, künstliche Daten 10 zu erzeugen und den Diskriminator dazu zu bewegen, die künstlichen Daten 10 einem realen Ursprung zuzuordnen.

In dem Schritt S5.2 wird die Topologie des zweiten künstlichen neuronalen Netzwerks 22 bzw. des Diskriminator des angepasst, wenn die Zuordnung des Diskriminators falsch war. Die Topologie des Diskriminators wird dahingehend angepasst, dass der Diskriminator einen künstlichen oder realen Ursprung eines Trainingsdatensatzes richtig erkennt, d. h. einen künstlich erzeugten Trainingsdatensatz 10 als solchen zu identifizieren.

Ist die Zuordnung keine Binärzahl, sondern ein Skalar, kann auch eine Kombination der Schritte S5.1 und S5.2 durchgeführt werden, d. h. es wird die Topologie des ersten künstlichen neuronalen Netzwerks und des zweiten künstlichen neuronalen Netzwerks angepasst.

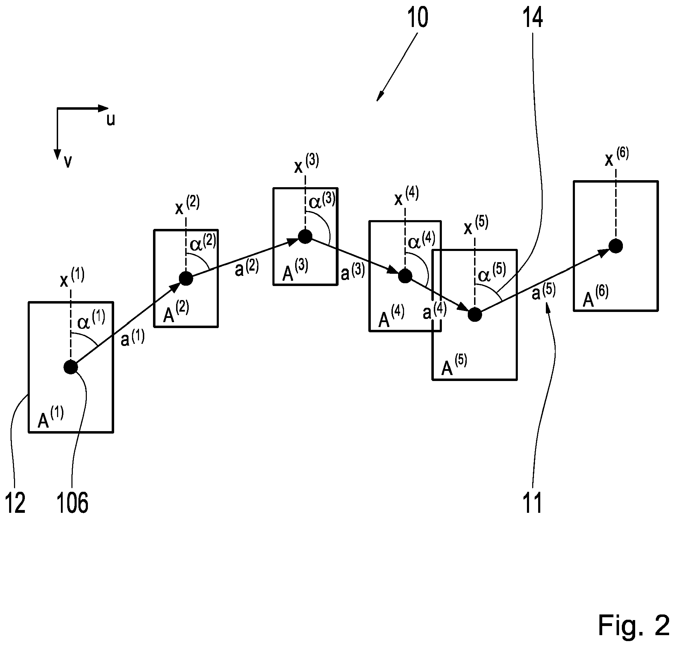

Die Figur 2 zeigt eine Trajektorie eines Objekts, die in einem Trainingsdatensatz 10 gespeichert ist. Der Trainingsdatensatz 10 wurde von einem ersten künstlichen neuronalen Netzwerk 18 erzeugt. Das Objekt gemäß dem Trainingsdatensatz 10 bewegt sich in zwei Bewegungsrichtungen u, v. Die Position des Objekts ist mittels einer rechteckigen Hülle 12, welche das Objekt umschließt, gespeichert. Bei der Hülle 12 handelt es sich um die kleinste, rechteckige und das Objekt umschließende Hülle. Die Position des Objekts ist in Form des Mittelpunkts 106 der Hülle 12 gespeichert.

Die Bewegung des Objekts ist kontinuierlich. Die Bewegung des Objekts ist als diskretisierte Trajektorie mit sechs Datenpunkten x¹ ... x⁶ gespeichert. Zwischen den Datenpunkten x¹ ... x⁶ wurde linear interpoliert, so dass zwei Datenpunkte x', xⁱ⁺¹ mit einem Richtungsvektor r' verbunden sind. Der Richtungsvektor r' zeigt jeweils in eine Richtung 14. Die Änderung der Richtung zwischen zwei Richtungsvektoren rⁱ, rⁱ⁺¹ bildet eine Charakteristik 24 des Trainingsdatensatzes 10.

In Figur 2 ist ersichtlich, dass die Größe der Hüllen 12 variiert. Die Größe der Hüllen 12 bildet ebenfalls eine Charakteristik 24 des Trainingsdatensatzes 10. In Figur 2 ist die Größe einer Hülle mit A¹... A⁶ bezeichnet.

Zudem variieren in Figur 2 die Schrittweiten zwischen den Datenpunkten x¹ ... x⁶. Die Schrittweiten bilden ebenfalls eine Charakteristik 24 des Trainingsdatensatzes 10. In Figur 2 sind die Schrittweiten mit a¹... a⁶ bezeichnet.

### Bezugszeichen

- 10: Trajektorie
- 11: Schrittweite
- 12: Hülle
- 14: Richtung
- 18: künstliches neuronales Netzwerk
- 22: künstliches neuronales Netzwerk
- 24: Charakteristik
- 30: Verfahren

- 102: weißes Rauschen
- 104: Zuordnung
- 106: Mittelpunkt

- S1-S5.2: Verfahrensschritte

## Patentansprüche

1. Verfahren (30) zum Trainieren von künstlichen neuronalen Netzwerken (18; 22) mit den folgenden Schritten:
- Bereitstellen (S1) von Referenzdaten (16) umfassend wenigstens einen spatio-temporären Referenzdatensatz, wenigstens eine Charakteristik des Referenzdatensatzes und eine Zuordnung des Referenzdatensatzes zu einem realen Referenzdatensatz oder einem künstlichen Referenzdatensatz;
- Erzeugen (S2) eines künstlichen spatio-temporären Trainingsdatensatzes (10) mittels eines ersten künstlichen neuronalen Netzwerks (18) mit einer ersten Topologie;
- Ermitteln (S3) von wenigstens einer Charakteristik (24) des erzeugten Trainingsdatensatzes;
- Erkennen (S4) des erzeugten Trainingsdatensatzes mittels eines zweiten künstlichen neuronalen Netzwerks (22) mit einer zweiten Topologie als einen realen Trainingsdatensatz oder als einen künstlichen Trainingsdatensatz, indem die ermittelte Charakteristik (24) mit einer Charakteristik des Referenzdatensatzes verglichen wird;
- Verändern (S5.1) der ersten Topologie, um das Erzeugen von künstlichen spatio-temporären Trainingsdaten zu verbessern und/oder verändern (S5.2) der zweiten Topologie, um das Erkennen des erzeugten Trainingsdatensatzes zu verbessern, aufgrund des Erkennens des Trainingsdatensatzes als künstlichen oder realen Datensatz.

2. Verfahren nach Anspruch 1, wobei die spatio-temporären Trainingsdaten Datenpaare aus einer Position eines Objekts sowie einem Zeitpunkt umfassen.

3. Verfahren nach Anspruch 2, wobei das Objekt als Hülle (12), welche das Objekt umfasst, gespeichert ist.

4. Verfahren nach Anspruch 3, wobei die Hülle (12) ein kleinstes Rechteck ist, welches das Objekt umfasst.

5. Verfahren nach Anspruch 3 oder Anspruch 4, wobei die wenigstens eine Charakteristik des Referenzdatensatzes und die wenigstens eine Charakteristik (24) des künstlichen Trainingsdatensatzes eine Größe der Hülle (12) ist.

6. Verfahren nach einem der vorstehenden Ansprüche, wobei die wenigstens eine Charakteristik des Referenzdatensatzes und die wenigstens eine Charakteristik (24) des künstlichen Trainingsdatensatzes eine Schrittweite (11) zwischen einem ersten Zeitpunkt und einem zweiten Zeitpunkt ist.

7. Verfahren nach einem der vorstehenden Ansprüche, wobei die wenigstens eine Charakteristik des Referenzdatensatzes und die wenigstens eine Charakteristik (24) des künstlichen Trainingsdatensatzes eine Richtungsänderung einer Richtung (14) zwischen Positionen zu Zeitpunkten ist.

8. Verfahren nach einem der vorstehenden Ansprüche, wobei die wenigstens eine Charakteristik (24) eines Datensatzes mehrere Datenpunkte umfasst und mittels einer Regressionsanalyse verarbeitet wird.

9. Verfahren nach Anspruch 8, wobei die Regressionsanalyse eine lineare Regressionsanalyse ist.

10. Verfahren nach einem der vorstehenden Ansprüche, wobei ein Abstand zwischen zwei Datensätzen anhand eines Abstands der wenigstens einen Charakteristik der Datensätze bestimmt wird.

11. Verfahren nach Anspruch 10, wobei der Abstand zwischen zwei Datensätzen anhand eines Abstands der Regressionsanalysen der Datensätze, insbesondere anhand eines Y-Achsenabschnittes und einer Steigerung, ermittelt wird.

12. Verfahren nach Anspruch 10 oder Anspruch 11, wobei der Abstand zwischen zwei Datensätzen anhand eines Regressionsfehlers der Regressionsanalysen ermittelt wird.

13. Verfahren nach einem der vorstehenden Ansprüche, wobei das Verfahren ein iteratives Verfahren ist.

14. Computerprogrammprodukt mit Programmcode-Mitteln, um das Verfahren gemäß einem der vorstehenden Ansprüche durchzuführen

15. Vorrichtung mit einem Prozessor und einem Speicher, auf welchen das Computerprogrammprodukt nach Anspruch 14 gespeichert ist, wobei der Prozessor eingerichtet ist, das Verfahren nach einem der vorstehenden Ansprüche 1-13 durchzuführen.

16. Datensatz (10), welcher mittels einer Vorrichtung nach Anspruch 15 künstlich erzeugt wurde, wobei die Vorrichtung mit einem Verfahren nach einem Verfahren nach einem der Ansprüche 1-13 trainiert wurde.
